Europäisches Patentamt

European Patent Office

Office européen des brevets

(19)

(11) EP 0 659 283 B1

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(21) Anmeldenummer: **93918910.6**

(22) Anmeldetag: **24.08.1993**

(51) Int Cl.6: **G02F 1/335**, G02F 1/313

(86) Internationale Anmeldenummer:
**PCT/DE93/00769**

(87) Internationale Veröffentlichungsnummer:
**WO 94/06053 (17.03.1994 Gazette 1994/07)**

(54) **INTEGRIERTES AKUSTO-OPTISCHES BAUELEMENT**

INTEGRATED OPTO-ACOUSTIC COMPONENT

COMPOSANT ACOUSTO-OPTIQUE INTEGRE

(84) Benannte Vertragsstaaten:
**CH DE ES FR GB IT LI SE**

(30) Priorität: **10.09.1992 DE 4230300**

(43) Veröffentlichungstag der Anmeldung:
**28.06.1995 Patentblatt 1995/26**

(73) Patentinhaber: **ROBERT BOSCH GMBH**
**70442 Stuttgart (DE)**

(72) Erfinder: **KUEHNLE, Goetz**
**D-70839 Gerlingen (DE)**

(56) Entgegenhaltungen:
**DE-A- 3 013 335          FR-A- 2 555 769**
**US-A- 3 850 503**

- **OPTICS COMMUNICATIONS. Bd. 81, Nr. 6 , 15. März 1991 , AMSTERDAM NL Seiten 359 - 363 L.OLIVIER ET AL. 'Polarization-independent operation of an acousto-optical device at the transmit end of a single-laser transmission system using self-heterodyning'**

**Beschreibung**

STAND DER TECHNIK

Die Erfindung betrifft ein integriertes akusto-optisches Bauelement zur Frequenzverschiebung von Lichtfrequenzen nach der Gattung des Anspruchs 1.

Derartige akusto-optische Bauelemente zur Frequenzverschiebung bzw. -versetzung werden z.B. in optischen Heterodyn-Interferometern benötigt. Ein derartiges, als Modulator ausgebildetes akusto-optisches Bauelement ist beispielsweise aus Appl. Phys. Lett. 17, 265 (1970), Kuhn, Daks, Heidrich, Scott, bekannt. Bei diesem bekannten Modulator wird zunächst ein Lichtleiter aufgeteilt, und jeder der beiden aufgeteilten Lichtstrahlen muß dann aufgeweitet und einer Optik zugeführt werden, die jeweils ein breites paralleles Lichtbündel erzeugt. Diese breiten Lichtbündel durchlaufen dann Zonen akustischer Wellen, die sich senkrecht zum Licht ausbreiten. Sie wirken wie ein optisches Gitter des Bragg-Typs, so daß das durchtretende Licht gebeugt wird. Der Beugungsstrahl erster Ordnung wird ausgewertet und beinhaltet eine Frequenzverschiebung. Über ein optisches System erfolgt eine Rückführung in Lichtleiter, wobei das frequenzverschobene Bündel erster Ordnung weiter ausgewertet wird. Der Nachteil dieser bekannten Anordnung besteht darin, daß die Aufweitung des Lichtstrahls und Wiederrückführung in einen Lichtleiter technologisch sehr aufwendig ist. Da die akustische Welle lediglich im Bereich der Breite des Lichtstrahls wirkt, muß eine hohe elektrische Leistung für die akustische Welle aufgebracht werden. Weiterhin ist die Abtrennung des frequenzverschobenen Bündels technologisch problematisch, da der Beugungswinkel relativ klein ist.

Weiterhin ist aus Journal of Lightware Technology, Vol. 6, No. 6, Juni 1988, S. 903 ff, Hinkov, Opitz, Sohler, ein akusto-optischer Modenkonverter bekannt, bei dem keine Aufweitung des in Wellenleitern geführten Lichts erforderlich ist. Die Schallwelle wird parallel zum Lichtleiter geführt. wobei ein doppelbrechendes Material erforderlich ist. Zur Frequenzversetzung wird der Wellenleiter in einer Y-Verzweigung verzweigt, wobei die beiden Arme der Y-Verzweigung als TE-TM-Modenkonverter ausgebildet sind, die mit akustischen Oberflächenwellen betrieben werden. Die akustische Mittelfrequenz, bei der die Modenkonversion für eine bestimmte optische Wellenlänge stattfindet, ist weitgehend durch die Kristalldoppelbrechung bestimmt. Mit Hilfe einen protronenausgetauschten Schicht wird die Doppelbrechung in einem der Arme verschoben. Die akusto-optische Wechselwirkung in beiden Armen findet dann bei unterschiedlichen akustischen Mittelfrequenzen statt, so daß die optischen Frequenzen beider austretender Strahlen um die Differenzfrequenz verschoben sind. Der Nachteil dieser bekannten Anordnung besteht darin, daß ein teures, doppelbrechendes Material benötigt wird, wie z.B. $LiNbO_3$. Ein weiterer Nachteil ist die relativ hohe Temperaturempfindlichkeit dieses Verfahrens.

Außerdem ist aus Appl. Phys. Lett. 19 ( 1971) 428 ff, Kuhn, Heidrich, Lean, ein akusto-optischer Modenkonverter bekannt, bei dem auch keine Aufweitung des in Wellenleitern geführten Lichts erforderlich ist. Die Schallwelle wird wieder parallel zum Lichtleiter geführt, in dem mindestens zwei Moden gleicher Polarisation ausbreitungsfähig sein müssen. Durch Streuung des Lichtes an der akustischen Welle wird eine Mode in eine andere Mode konvertiert und dabei frequenzverschoben. Nachteile dieses Verfahrens liegen in der sehr schlechten Kopplung der Moden, der schlechten Trennung des nicht frequenzverschobenen und des frequenzverschobenen Lichtes und darin, daß der Lichtleiter mindestens 2-modig sein muß.

FR-A-2 555 796 offenbart ein integriertes akusto-optisches Bauelement, wie es im Oberbegriff des Anspruchs 1 definiert ist. Dieses vorveröffentlichte Bauelement besitzt allerdings keine Begreuzer, die die seitliche Ausbreitung der akustischen Wellen verhindern und die einen akustischen Wellenleiter bilden. DE-A-30 13 335 und US-A-3 850 503 offenbaren ebenfalls integriert akusto-optische Bauelemente, die keine seitlichen Begreuzer aufwiesen.

VORTEILE DER ERFINDUNG

Das erfindungsgemäße akusto-optische Bauelement mit den kennzeichnenden Merkmalen des Hauptanspruchs hat gegenüber dem aufgezeigten Stand der Technik den Vorteil, daß zum einen kein doppelbrechendes elektro-optisches Material verwendet werden kann (wie z. B. Oxinitrid auf Silizium-Wafern oder in Polymeren), um eine Frequenzverschiebung zu erzeugen. Hierdurch können relativ billige Materialien verwendet werden, die weniger temperaturempfindlich sind. Eine Aufweitung des in Lichtleitern geführten Lichts ist nicht erforderlich, und es wird bei geringer Leistung des akustischen Frequenzerzeugers eine hohe Effizienz erreicht. Die Probleme bei einer Auftrennung gebeugter Strahlenbündel treten nicht auf. Darüber hinaus wirkt das erfindungsgemäße frequenzverschiebende Bauelement gleichzeitig als optischer Koppler, so daß eine zusätzliche bzw. gleichzeitige Verwendung als optischer Schalter möglich ist. Da das erfindungsgemäße akusto-optische Bauelement lediglich zwei in bestimmter Weise angeordnete Lichtleiter mit unterschiedlichen Ausbreitungskonstanten sowie einen akustischen Schallerzeuger benötigt, kann es einfach und kostengünstig hergestellt werden.

Durch die in den Unteransprüchen aufgeführten Maßnahmen sind vorteilhafte Weiterbildungen und Verbesserungen des im Anspruch 1 angegebenen Bauelements möglich.

Zur optimalen Auskopplung beträgt die Differenz der Ausbreitungskonstanten

$$(\vec{\beta}_a, \vec{\beta}_b)$$

der beiden Lichtwellenleiter der Ausbreitungskonstanten $\vec{K}$ der akustischen Welle

$$(\vec{\beta}_b = \vec{\beta}_a \pm \vec{K}).$$

Durch Ausschalten des Schallerzeugers oder Veränderung von dessen Frequenz können Schaltfunktionen erzeugt werden, das heißt, die Überkopplung von einem zum anderen Lichtleiter unterdrückt werden.

Zur Erzeugung der Differenz der Ausbreitungskonstanten der Lichtwellenleiter können unterschiedliche Dimensionierungen derselben und/oder unterschiedliche Materialien derselben und/oder unterschiedliche Moden der Lichtwellenführung vorgesehen sein. Dabei können beispielsweise zur unterschiedlichen Dimensionierung zweckmäßigerweise unterschiedliche Breiten und/oder Höhen der Lichtwellenleiter vorgesehen sein.

Der Schallerzeuger ist zweckmäßigerweise zur Erzeugung akustischer Oberflächenwellen vorgesehen und als interdigitaler elektroakustischer Wandler ausgebildet, der in relativ einfacher Weise z.B. durch Aufdampfen oder Bedrucken der Oberfläche des Bauelements gebildet werden kann.

Der Schallerzeuger ist in Verlängerung des Kopplungsbereichs zwischen den beiden Wellenleitern angeordnet, so daß eine einfache und leicht realisierbare Struktur vorliegt.

Der Schallerzeuger und der daneben angeordnete Kopplungsbereich sind in der Längsrichtung auf wenigstens einer Seite von einem Schallabsorber begrenzt, um eine unkontrollierte Schallausdehnung in Bereichen zu verhindern, wo diese unerwünscht ist.

Erfindungsgemäß sind zu beiden Seiten des Kopplungsbereichs die seitliche Ausbreitung der akustischen Wellen verhindernde Begrenzer angeordnet, die einen akustischen Wellenleiter bilden, und dadurch kann die die elektrische Leistung des Schallerzeugers reduziert bzw. die Schalleistung im Kopplungsbereich erhöht werden,

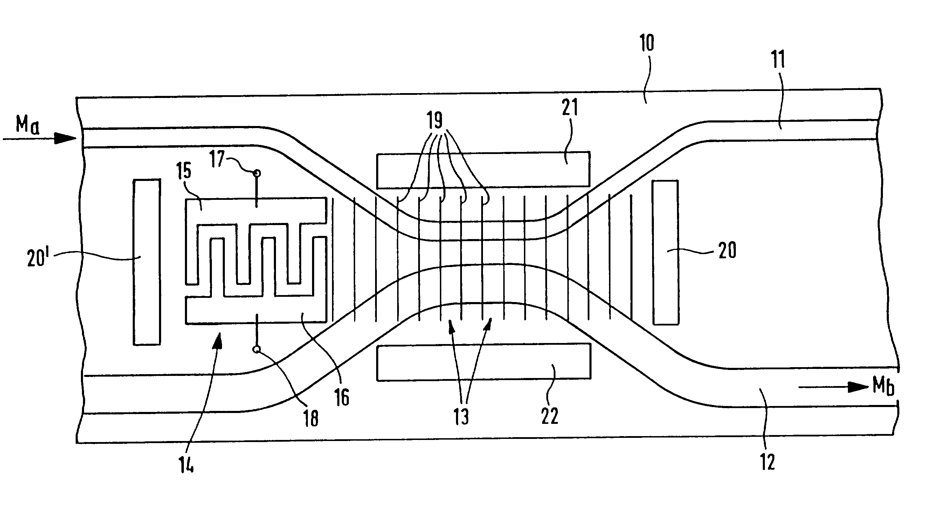

Ein Ausführungsbeispiel ist in der Zeichnung dargestellt und in der nachfolgenden Beschreibung näher erläutert. Die einzige Figur zeigt schematisch das akusto-optische Bauelement in der Draufsicht.

Auf einem piezoelektrischen Substrat 10 sind zwei Lichtwellenleiter 11,12 mit unterschiedlichen Ausbreitungskonstanten $\vec{\beta}_a$ und $\vec{\beta}_b$ angeordnet. Im Ausführungsbeispiel werden die unterschiedlichen Ausbreitungskonstanten durch unterschiedliche Breiten der Lichtwellenleiter 11,12 erreicht, jedoch können auch andere unterschiedliche Dimensionierungen, wie z.B. unterschiedliche Höhen, unterschiedliche Materialien und/oder die Verwendung unterschiedlicher Moden der Lichtausbreitung, eingesetzt werden. In einem Kopplungsbereich 13 sind die beiden Lichtwellenleiter 11,12 einander über eine bestimmte Strecke so angenähert, daß sich die Felder der beiden Moden a und b des Lichts in den beiden Lichtwellenleitern 11, 12 gut genug überlappen. Hierdurch wird der Koppelfaktor K des so gebildeten Richtkopplers ungleich Null. Ein in Längsrichtung zum Kopplungsbereich 13 zwischen den beiden Lichtwellenleitern 11,12 angeordneter Schallerzeuger 14 für akustische Wellen ist als interdigitaler elektroakustischer Wandler ausgebildet, wie er im eingangs genannten Stand der Technik näher beschrieben ist. Ein derartiger Schallerzeuger 14 besteht aus zwei ineinander verzahnten Elektroden 15,16, wobei Zungen der beiden verzahnten Elektroden 15,16 parallel nebeneinander angeordnet sind. Werden Anschlüsse 17,18 dieser Elektroden 15,16 mit einer Wechselspannung beaufschlagt, so wird durch Elektrostriktion des piezoelektrischen Substrats oder einer aufgebrachten Schicht eine sich in Längsrichtung ausbreitende Schallwelle 19 mit einer entsprechenden Frequenz erzeugt. Diese Schallwelle erstreckt sich über den Kopplungsbereich 13 und wird in Längsrichtung am dem Schallerzeuger 14 gegenüberliegenden Endbereich des Kopplungsbereichs 13 durch einen Schallabsorber 20 begrenzt. An der gegenüberliegenden Seite des Schallerzeugers 14 ist ein weiterer Schallabsorber 20' angeordnet. Durch die Begrenzer 21,22 wird im Kopplungsbereich 13 ein akustischer Wellenleiter gebildet. Dies führt zu einer energetisch konzentrierteren akustischen Welle (Oberflächenwelle) im Kopplungsbereich 13 und verhindert eine seitliche Ausbreitung der akustischen Welle.

Über den Lichtwellenleitern 11,12 kann in bekannter Weise noch eine Isolierschicht angeordnet sein. Der Schallerzeuger 14, die Schallabsorber 20,20' und die akustischen Wellenleiter 21,22 können auch auf dieser Isolierschicht angeordnet sein, so daß sie sich in der Draufsicht mit den Lichtwellenleitern überlappen können. Wenn diese Isolierschicht als piezoelektrische Schicht ausgebildet ist, kann das Substrat 10 auch aus einem nicht piezoelektrischen Material bestehen.

In einer typischen beispielsweisen Dimensionierung kann der Abstand zwischen den beiden Lichtwellenleitern im Kopplungsbereich 13 den Wert $10\,\mu$ und im übrigen den zehnfachen Wert aufweisen. Die Länge des Kopplungsbereichs beträgt einige Millimeter,und die Breite der Lichtwellenleiter 11 und 12 beträgt 3 bzw. $10\,\mu$. Variationen dieser Werte sind selbstverständlich nicht zuletzt in Abhängigkeit der verwendeten Lichtwellenlängen möglich, wobei insbesondere Laserlicht, z. B. eine Laserdiode, eingesetzt wird.

Das Licht im Lichtwellenleiter 11 wird in der Mode a ($M_a$) mit der Ausbreitungskonstanten $\vec{\beta}_a$ und der Kreisfrequenz $\omega_a$ geführt, Im Lichtwellenleiter 12 wird das Licht in der Mode b mit der unterschiedlichen Ausbreitungskonstanten $\vec{\beta}_b$ und der Kreisfrequenz $\omega_b$ geführt. Die akustische Oberflächenwelle 18 hat eine Ausbreitungskonstante $\vec{K}$ und eine Kreisfrequenz $\Omega$. Die Moden a und b und die akustische Welle 19 breiten sich im Wechselwirkungsbereich, also im Kopplungsbereich 13, kollinear aus. Da die Ausbreitungskonstanten der Moden a und b unterschiedlich sind, ist bei richtiger Wahl der Koppellänge L, also der Länge des Kopplungsbereichs 13 und des Koppelabstandes, also dem Abstand der Lichtwellenleiter im Koppelbereich 13 und damit des Koppelfaktors $\kappa$, ohne die akustische Welle die Konversion von Mode a zu Mode b, also vom Lichtwellenleiter 11 zum Lichtwellenleiter 12 und umgekehrt, nahezu Null.

Wird ein Lichtstrahl der Mode a gemäß der Figur in den Lichtwellenleiter 11 eingestrahlt und ist der Schallerzeuger 14 eingeschaltet, so werden die Photonen der Mode a an den Phononen der akustischen Welle gestreut (Brillouin-Streuung). Die gestreute Welle hat die Ausbreitungskonstante

$$\vec{\beta}_a \pm \vec{K}$$

(+: ein Phonon der akustischen Welle wird absorbiert, -: ein Phonon der akustischen Welle wird freigesetzt). Stimmt diese Ausbreitungskonstante mit der Ausbreitungskonstanten der Mode b des Lichtwellenleiters 12 überein (Phasenanpassung), so gilt:

$$\vec{\beta}_b = \vec{\beta}_a \pm \vec{K}$$

Die gestreute Welle wird in die Mode b konvertiert. Die gestreute Welle wird nur in dem Teil der Mode a erzeugt, der mit dem Lichtwellenleiter 12 überlappt, also im Kopplungsbereich, denn nur dort kann sich diese Welle ausbreiten. Am Ausgang des Lichtwellenleiters 11 liegt also die ungestreute Welle a vor, und am Ausgang des Lichtwellenleiters 12 liegt nun die Mode b vor, die die gleiche Ausbreitungskonstante und Frequenz wie die gestreute Welle hat. Durch die Streuung der Welle a an der akustischen Welle wird die Frequenz verschoben. Die Frequenz der Welle b ist damit:

$$\omega_b = \omega_a \pm \Omega$$

Das Licht der Mode b im Lichtwellenleiter 12 ist also frequenzverschoben. Dies ergibt sich konsequenterweise aus der Anwendung des Impuls- und Energiesatzes bei der Streuung (Stoß) von Photonen und Phononen. Die Effizienz der Konversion der Mode a in die frequenzverschobene Mode b liegt bei richtiger Wahl der geometrischen Dimensionen (Koppellänge, Koppelabstand) nahe bei 100 %.

Die geometrischen Dimensionen können dabei z.B. so gewählt werden, daß für dne Koppelabstand und den daraus resultierenden Koppelfaktor $\kappa$ und die Koppellänge L gilt:

$$\kappa = \frac{(2m_1 + 1) \cdot |\vec{K}|}{2 \sqrt{(2 \cdot m_2)^2 - (2 \cdot m_1 + 1)^2}}$$

$$L = \frac{\pi}{|\vec{K}|} \cdot \sqrt{(2 \cdot m_2)^2 - (2 \cdot m_1 + 1)^2}$$

mit $m_2 > m_1 \geq 0$, $m_1$, $m_2$ ganze Zahlen.

Das Verhältnis von nicht frequenzverschobenem Licht im Lichtwellenleiter 12 zu frequenzverschobenem Licht im Lichtwellenleiter 12 beträgt damit ungefähr:

$$(\frac{2 \cdot m_1 + 1}{2} \cdot \pi \cdot \frac{\delta\kappa}{\kappa})^2 + (\frac{2 \cdot m_2}{2 \cdot m_1 + 1} \cdot m_2 \cdot \pi \cdot \frac{\delta L}{L})^2$$

wobei $\delta\kappa$ und $\delta L$ die Abweichung von $\kappa$ bzw. L von den oben genannten idealen Werten angeben. Im idealen Fall wird also nur frequenzverschobenes Licht in den Lichtwellenleiter 12 gekoppelt.

Im Gegensatz zum dargestellten Ausführungsbeispiel könnte auch Licht der Mode b in den Lichtwellenleiter 12 eingespeist werden. Nun ergibt sich im Kopplungsbereich eine Streuung zum Lichtwellenleiter 11 und eine Konversion in die Mode a. Während beim dargestellten Beispiel (Einspeisung von Licht der Mode a in den Lichtwellenleiter 11) eine Frequenzerhöhung um den Wert $\Omega$ zu beobachten ist, kann nunmehr eine Frequenzerniedrigung um den Wert $\Omega$ festgestellt werden. Wird in Gegenrichtung Licht in die Lichtwellenleiter 11 bzw. 12 eingespeist, so kehren sich die Verhältnisse um.

Die dargestellte Anordnung kann auch als optischer Schalter mit Schaltzeiten in der Größenordnung von 10 μs verwendet werden, indem bei eingeschaltetem Schallerzeuger ein Lichtübergang in den jeweils anderen Lichtwellenleiter erfolgt, im ausgeschalteten Zustand des Schallerzeugers 18 dagegen nicht. Außerdem kann durch das dargestellte Bauelement - wie beschrieben - nicht nur eine Freqenzverschiebung, sondern gleichzeitig auch eine Strahlenteilung realisiert werden, wie sie beispielsweise in einem Heterodyn-Interferometer benötigt werden.

Hierbei müssen der Koppelabstand und damit der Koppelfaktor $\kappa$ und die Koppellänge L dem Strahlteilungsverhältnis entsprechend gewählt werden. Dies kann man z.B. erreichen, indem man in den oben genannten Gleichungen den Term $(2 \cdot m_1 + 1)$ durch den Term $(2 \cdot m_1 + 2 \cdot \arcsin (\sqrt{\alpha})/\pi)$ ersetzt. $\alpha$ ist dabei das Verhältnis der Lichtleistung am Ausgang des Lichtwellenleiters 12 zur Lichtleistung am Eingang des Lichtwellenleiters 11.

Außerdem kann die dargestellte Anordnung auch als variabler Strahlteiler verwendet werden, indem man die akustische Frequnz variiert und damit von der idealen Gleichheit

$$\vec{\beta}_b = \vec{\beta}_a \pm \vec{K}$$

($\vec{K}$ variabel) abweicht. Durch diese Variation der akustischen Frequenz können beliebige Strahlteilungsverhältnisse eingestellt werden.

**Patentansprüche**

1. Integriertes akusto-optisches Bauelement zur Frequenzverschiebung von Lichtfrequenzen, mit zwei separat geführten Lichtwellenleitern (11, 12), die unterschiedliche Ausbreitungskonstanten $\vec{\beta}_a$ und $\vec{\beta}_b$ für Licht aufweisen, und die einen optischen, nach Art eines Richtkopplers ausgebildeten Kopplungsbereich (13) aufweisen, in welchem die beiden Lichtwellenleiter (11, 12) einen eine optische Kopplung erzeugenden geringen Abstand voneinander aufweisen, mit einem Schallerzeuger (14), der die beiden Lichtwellenleiter (11, 12) im Kopplungsbereich (13) in Längsrichtung der beiden Wellenteiter (11, 12) mit akustischen Wellen (19) beaufschlagt, dadurch gekennzeichnet, daß zu beiden Seiten des Kopplungsbereichs (13) die seitliche Ausbreitung der akustischen Wellen (19) verhindernde Begrenzer (21, 22) angeordnet sind, die einen akustischen Wellenleiter bilden.

2. Bauelement nach Anspruch 1, dadurch gekennzeichnet, daß die Differenz der Ausbreitungskonstanten $\vec{\beta}_a$ und $\vec{\beta}_b$ der Lichtwellenleiter (11,12) der Ausbreitungskonstanten $\vec{K}$ der akustischen Welle (19) entspricht:

$$\vec{\beta}_b = \vec{\beta}_a \pm \vec{K}.$$

3. Bauelement nach Anspruch 1 oder 2, dadurch gekennzeichnet, daß zur Erzeugung der Differenz der Ausbreitungskonstanten der Lichtwellenleiter (11,12) unterschiedliche Dimensionierungen derselben und/oder unterschiedliche Materialien derselben und/oder unterschiedliche Moden der Lichtwellenführung vorgesehen sind.

4. Bauelement nach Anspruch 3, dadurch gekennzeichnet, daß zur unterschiedlichen Dimensionierung unterschiedliche Breiten und/oder Höhen der Lichtwellenleiter (11,12) vorgesehen sind.

5. Bauelement nach einem der vorhergehenden Ansprüche, dadurch gekennzeichnet, daß der Schallerzeuger (14) zur Erzeugung akustischer Oberflächenwellen ausgebildet ist.

**6.** Bauelement nach Anspruch 5, dadurch gekennzeichnet, daß der Schallerzeuger (14) als interdigitaler elektroakustischer Wandler ausgebildet ist.

**7.** Bauelement nach einem der vorhergehenden Ansprüche, dadurch gekennzeichnet, daß der Schallerzeuger (14) in Verlängerung des Kopplungsbereichs (13) zwischen den beiden Wellenleitern (11,12) angeordnet ist.

**8.** Bauelement nach einem der vorhergehenden Ansprüche, dadurch gekennzeichnet, daß der Schallerzeuger (14) und der Kopplungsbereich (13) in der Längsrichtung auf wenigstens einer Seite von einem Schallabsorber (20,20') begrenzt sind.

**9.** Bauelement nach einem der vorhergehenden Ansprüche, gekennzeichnet durch die Verwendung als optischer Schalter.

**10.** Bauelement nach einem der vorhergehenden Ansprüche, gekennzeichnet durch die gleichzeitige Verwendung als Frequenzverschieber und als Strahlteiler.

**11.** Bauelement nach einem der vorhergehenden Ansprüche, gekennzeichnet durch die Verwendung als variabler Strahlteiler durch Variation der akustischen Frequenz.

**Claims**

**1.** Integrated acoustooptical component for frequency-shifting optical frequencies, having two separately guided optical waveguides (11, 12) which exhibit differing propagation constants $\vec{\beta}_a$ and $\vec{\beta}_b$ for light, and which exhibit an optical coupling region (13), which is designed in the manner of a directional coupler and in which the two optical waveguides (11, 12) exhibit a small spacing from one another generating an optical coupling, and having a sound generator (14) which acts with acoustic waves (19) on the two optical waveguides (11,12) in the coupling region (13), in the longitudinal direction of the two waveguides (11,12), characterised in that limiters (21, 22) preventing the lateral propagation of the acoustic waves (19) are disposed on both sides of the coupling region (13), which limiters form an acoustic waveguide.

**2.** Component according to Claim 1, characterised in that the difference of the propagation constants $\vec{\beta}_a$ and $\vec{\beta}_b$ of the optical waveguides (11, 12) corresponds to the propagation constant $\vec{K}$ of the acoustic wave (19):

$$\vec{\beta_a} = \vec{\beta_b} \pm \vec{K}.$$

**3.** Component according to Claim 1 or 2, characterised in that to generate the difference of the propagation constants of the optical waveguides (11, 12) differing dimensionings of the same and/or differing materials of the same and/or differing modes of the guidance of the optical waves are provided.

**4.** Component according to Claim 3, characterised in that differing widths and/or heights of the optical waveguides (11, 12) are provided for the differing dimensioning.

**5.** Component according to one of the preceding claims, characterised in that the sound generator (14) is designed to generate acoustic surface waves.

**6.** Component according to Claim 5, characterised in that the sound generator (14) is designed as an interdigital electroacoustic transducer.

**7.** Component according to one of the preceding claims, characterised in that the sound generator (14) is disposed in extension of the coupling region (13) between the two waveguides (11, 12).

**8.** Component according to one of the preceding claims, characterised in that the sound generator (14) and the coupling region (13) are bounded in the longitudinal direction on at least one side by a sound absorber (20, 20').

**9.** Component according to one of the preceding claims, characterised by use as an optical switch.

10. Component according to one of the preceding claims, characterised by simultaneous use as a frequency shifter and as a beam splitter.

11. Component according to one of the preceding claims, characterised by use as a variable beam splitter by variation of the acoustic frequency.


**Revendications**

1. Composant acousto-optique intégré pour le décalage en fréquence de la fréquence lumineuse, comportant deux guides d'ondes lumineuses (11, 12) séparés, ayant des constantes d'étalement $\vec{\beta}_a$ et $\vec{\beta}_b$ différentes pour la lumière et une plage de couplage optique (13), réalisée à la manière d'un coupleur directionnel dans lequel les deux guides d'ondes lumineuses (11, 12) ont entre eux une faible distance pour générer un couplage optique, un générateur sonore (14) qui sollicite les deux guides d'ondes lumineuses (11, 12) dans la plage de couplage (13), dans la direction longitudinale des deux guides d'ondes (11, 12) avec des ondes acoustiques (19),
   caractérisé en ce que
   des deux côtés de la plage de couplage (13), des limiteurs (21, 22) limitent l'étalement latéral des ondes acoustiques (19) et forment un guide d'ondes acoustiques.

2. Composant selon la revendication 1,
   caractérisé en ce que
   la différence des constantes d'étalement $\vec{\beta}_a$ et $\vec{\beta}_b$ des guides d'ondes lumineuses (11, 12 correspond aux constantes d'étalement $\vec{\kappa}$ de l'onde acoustique

$$\vec{\beta}_b = \vec{\beta}_a \pm \vec{\kappa} \ .$$

3. Composant selon la revendication 1 ou 2,
   caractérisé en ce que
   pour générer la différence des constantes d'étalement des guides d'ondes lumineuses (11, 12), on les dimensionne différemment et/ou on les réalise dans des matières différentes et/ou on prévoit des modes différents pour les guides d'ondes lumineuses.

4. Composant selon la revendication 3,
   caractérisé en ce que
   pour dimensionner différemment, on choisit des largeurs différentes et/ou des hauteurs différentes pour les guides d'ondes lumineuses (11, 12).

5. Composant selon l'une des revendications précédentes,
   caractérisé en ce que
   le générateur de son (14) est réalisé pour générer des ondes acoustiques de surface.

6. Composant selon la revendication 5,
   caractérisé en ce que
   le générateur de son (14) est réalisé comme un convertisseur électroacoustique interdigité.

7. Composant selon l'une quelconque des revendications précédentes,
   caractérisé en ce que
   le générateur de son (14) est prévu dans le prolongement de la plage de couplage (13) entre les deux guides d'ondes (11, 12).

8. Composant selon l'une quelconque des revendications précédentes,
   caractérisé en ce que
   le générateur de son (14) et la plage de couplage (13) sont limités dans la direction longitudinale, sur au moins un côté, par un absorbeur de son (20, 20').

9. Composant selon l'une des revendications précédentes,
   caractérisé en ce qu'

il est utilisé comme commutateur optique.

10. Composant selon l'une quelconque des revendications précédentes,
caractérisé en ce qu'
il est utilisé en même temps comme décaleur de fréquence et comme diviseur de faisceau.

11. Composant selon l'une des revendications précédentes,
caractérisé en ce qu'
il est utilisé comme diviseur de faisceau variable par variation de la fréquence acoustique.

Ma  Mb  10  11  12  13  14  15  16  17  18  19  20  20'  21  22

9